# FASCICULE DE BREVET EUROPEEN

(11) **EP 1 320 648 B1**
(45) Date de publication et mention de la délivrance du brevet: **06.09.2006**
(21) Numéro de dépôt: 01974415.0
(22) Date de dépôt: 01.10.2001
(51) Int. Cl.: E04B 2/90, E06B 3/54, F16C 11/08

(54) **ELEMENT DE FIXATION POUR DES PLAQUES**
PANEELBEFESTIGUNGSELEMENT
ELEMENT FOR FIXING PLATES

(30) Priorité: 30.09.2000 DE 10048573
(43) Date de publication de la demande: 25.06.2003
(73) Titulaire: SAINT-GOBAIN GLASS FRANCE, 92400 Courbevoie (FR)
(72) Inventeur: HERMENS, Ulrich, D-52078 Aachen (DE); DEDERICHS, August, D-52072 Aachen (DE)
(74) Mandataire: Muller, René
(86) Numéro de dépôt international: PCT/FR2001/003024
(87) Numéro de publication internationale: WO 2002/029173

(56) Documents cités:
- DE-A- 2 102 270
- DE-A- 19 749 634
- DE-U- 29 807 905
- DE-U- 29 923 385
- FR-A- 2 634 839
- FR-A- 2 676 768
- US-A- 2 274 417
- US-A- 4 334 795

## Description

L'invention se rapporte à un élément de fixation pour des plaques, en particulier pour des feuilles de verre, qui comprend un pivot allongé à fixer à une ossature et présentant une extrémité libre et un Logement creux hébergeant celle-ci de façon mobile, dans lequel un élément d'articulation qui supporte le pivot de façon pivotante dans le logement creux permet des mouvements de basculement de l'axe longitudinal du pivot dans le logement creux.

Pour la fixation de plaques rigides, comme par exemple des plaques de verre, à des ossatures fixes, comme par exemple des façades de bâtiments, il est généralement connu de suspendre celles-ci à des points individuels au moyen d'éléments de fixation (appelés aussi « attaches ponctuelles »), qui offrent différents degrés de liberté de mouvement de rotation et de translation. Les degrés de liberté en rotation sont la plupart du temps réalisés au moyen de rotules, tandis que les degrés de liberté en translation sont assurés par des paliers libres. Ainsi, les plaques peuvent légèrement s'incurver élastiquement d'une part sous l'effet d'efforts appliqués, par exemple la force du vent, et d'autre part en particulier des dilatations thermiques différentes des plaques et de l'ossature peuvent être reprises pratiquement sans effort.

DE-A1-197 49 634 décrit un élément de fixation dans lequel l'extrémité libre d'un pivot logé de façon mobile dans un logement creux est constituée directement par une bille et permet ainsi des mouvements de basculement de l'axe longitudinal du pivot. Le logement creux lui-même est en forme de cylindre creux et permet par conséquent aussi des mouvements du pivot en pivot en direction axiale, des ressorts de compression disposés de part et d'autre de la portion de sphère dans la direction axiale limitant cette mobilité axiale. La partie d'une plaque fixée à une ossature au moyen de cet élément de fixation peut non seulement connaître des mouvements de basculement ou de courbure mais aussi des débattements normaux par rapport à la surface de la plaque. Un inconvénient certain de cette construction est que la surface sphérique de l'extrémité du pivot glisse directement sur les parois du logement creux de réception.

DE-A1-198 00 614 décrit un autre élément de fixation, qui comprend un élément sphérique creux disposé dans un logement creux de réception de façon pivotante. Au milieu de ce logement se trouve l'extrémité libre d'un pivot montée avec un jeu radial. Cette configuration permet la compensation des variations dimensionnelles entre la position du pivot dans la plaque devant être fixée et la partie de réception correspondante dans l'ossature. Une possibilité de translation axiale de cette extrémité libre dans la situation montée n'est toutefois pas prévue ici, car l'extrémité libre du pivot est vissée solidement après le positionnement radial avec l'articulation sphérique (rotule).

DE-A1-197 13 678 divulgue également un élément de fixation avec un pivot et un logement creux à installer dans des alésages de feuilles de verre. Ici aussi, il est prévu une compensation de tolérance en direction orthogonale à l'axe longitudinal du pivot. Deux bagues d'élastomère entourant le pivot à l'intérieur du logement creux limitent la mobilité du pivot en direction axiale. Une mobilité du pivot purement en translation est certes montrée, mais rendue possible seulement par compression d'un bague d'élastomère sur tout son périmètre.

On connaît par EP-B1-0 655 543 un élément de fixation applicable pour des plaques, en particulier pour des plaques de verre, dans lequel une combinaison d'un logement creux en forme de godet avec une tête du genre d'un piston à l'extrémité libre d'un pivot remplace une articulation à rotule. Le logement creux se trouve dans une ferrure fixée à la plaque associée, tandis que le pivot est fixement - ou avec les degrés de liberté en translation précités - attaché à l'ossature. La tête du genre d'un piston, qui est réalisée avec une surface attaché à l'ossature. La tête du genre d'un piston, qui est réalisée avec une surface latérale approximativement sphérique, est entourée par le logement creux avec un jeu radial faible. Dans la direction axiale du pivot, elle est encadrée des deux côtés par des couches élastiques intermédiaires, qui par compression permettent d'une part de très faibles déplacements axiaux mais permettent surtout des mouvements de pivotement entre le logement creux et la tête, respectivement le pivot. Cette possibilité de pivotement dans l'espace autour du centre de la tête procure les degrés de liberté en rotation nécessaires pour une courbure quelconque des plaques fixées.

Par EP-A1-0 863 287, on connaît une variante de l'élément de fixation précité, dans laquelle la tête du genre d'un piston est pourvue, sur son plus grand périmètre, d'une bague en matière plastique qui doit minimiser le jeu radial dans le logement creux ainsi que le frottement et l'usure entre la surface latérale de la tête et la surface intérieure du logement creux. Pour le reste, cette construction est pratiquement identique à la réalisation antérieure.

EP-A1-0 784 129 décrit également un élément de fixation pour des plaques, en particulier pour des plaques de verre, qui doit permettre l'établissement d'angles entre la plaque à maintenir et l'ossature. A cet effet, la tige de l'élément de fixation sortant de la plaque est divisée en deux dans le sens de la longueur, tandis qu'un tenon fileté s'étend longitudinalement à travers les deux parties. Les deux parties de la tige ont des faces d'extrémité de forme sphérique creuse. Celles-ci coopèrent chacune avec une rondelle, qui a d'un côté une forme sphérique avec un rayon s'adaptant aux faces d'extrémité sphériques creuses et dont l'autre côté est plan. Les parties de la tige avec les rondelles correspondantes sont placées de part et d'autre d'un élément de support de l'ossature, qui est pourvu d'un alésage pour le passage du tenon fileté. Au moyen de ce dernier, les parties de la tige avec les rondelles - qui sont traversées avec un jeu radial suffisant par le tenon fileté - sont assemblées l'une à l'autre par vissage. Ainsi, les côtés plans des rondelles sont serrés sur les deux surfaces planes de l'élément de support disposées en vis-à-vis. Dans l'alésage de celui-ci, le tenon fileté présente aussi un jeu radial relativement grand, de façon à pouvoir être réglé radialement dans celui-ci lors du montage. Selon la force du pré-serrage, on peut également reprendre ici des mouvements de compensation par translation. En même temps, les portions de coquilles sphériques correspondantes permettent pendant le montage un réglage angulaire de l'axe de l'élément de fixation par rapport à l'élément de support. Les éléments de fixation dotés de cette possibilité de réglage servent principalement à suspendre des plaques (de verre) planes rigides à des parois présentant des courbures ou des brisures.

Le document U5-A-4 334 795 décrit un élément de fixation pour des plaques, en particulier pour des feuilles de verre, qui comprend un pivot allongé à fixer à une ossature et présentant une extrémité libre et un logement creux hébergeant celle-ci de façon mobile, dans lequel un élément d'articulation qui supporte le pivot de façon pivotante dans le logement creux permet des mouvements de basculement de l'axe longitudinal du pivot dans le logement creux.

L'invention a pour objet de perfectionner encore davantage un élément de fixation de cette nature.

Conformément à l'invention, cet objectif est atteint avec les caractéristiques des revendications indépendantes 1 et 2. Les caractéristiques des revendications dépendantes des revendications indépendantes respectives révèlent des développements avantageux de ces objets. Des revendications secondaires visent des vitres pourvues de tels éléments de fixation ainsi que leur utilisation dans des vitrages de bâtiments.

La mobilité axiale de l'extrémité libre du pivot, qui est susceptible d'être limitée, est produite dans une première variante selon l'invention par le fait que l'on prévoit comme logement creux de réception un perçage (alésage) dans un élément sphérique monté façon pivotante, perçage dans lequel le pivot peut glisser de façon axiale.

Dans une deuxième variante selon l'invention, on prévoit un élément en forme de manchon avec au moins un composant déformable élastiquement et un manchon interne, dans la lumière duquel l'extrémité libre du pivot peut être déplacée axialement et peut être guidée en pivotement grâce à la déformation élastique dudit composant.

Dans encore une autre variante de l'invention, on prévoit un élément en forme de manchon avec au moins un composant élastiquement déformable, avec lequel l'extrémité libre du pivot est liée solidement de sorte qu'elle peut être guidée en pivotement grâce à la déformation élastique dudit composant.

Dans une réalisation préférée de cette variante, l'élément élastique est suffisamment capable de cisaillement pour permettre une mobilité axiale limitée du pivot à l'intérieur de l'élément de fixation.

De préférence dans toutes les variantes, le jeu radial pour le guidage radial du pivot est réglé au plus faible possible. On remarquera que « un jeu aussi faible que possible » ou « jeu minimal » est utilisé ici à la place de l'expression courante « sans jeu » parce qu'à strictement parler, des pièces assemblées sans jeu ne sont pas mobiles l'une par rapport à l'autre. Dans tous les cas, il faut éviter des phénomènes d'usure, des bruits de cognement et analogues causés par un jeu trop grand, ainsi que des grippages et des phénomènes d'usure provoqués par un jeu trop faible.

L'alésage dans l'élément d'articulation, hébergeant l'extrémité du pivot, peut être réalisé sous forme de trou borgne ou de trou traversant. La mobilité axiale entre le pivot et le logement creux peut être limitée, par exemple par des couches intermédiaires élastiques ou des éléments à ressort.

La tête du genre d'un piston (généralement en forme d'épaississement ou de surépaisseur) prévue dans l'état de la technique à l'extrémité du pivot pourrait ici être formée directement par l'élément d'articulation, qui entoure l'extrémité du pivot, une mobilité axiale pouvant être prévue entre cette tête et le pivot lui-même. Dans une autre réalisation préférée, le pivot peut comme auparavant être doté d'une tête ou surépaisseur terminale fixe, qui peut être supportée de façon coulissante, à la manière d'un piston, dans l'alésage de l'élément d'articulation, celle-ci ne pouvant pas se coincer dans son guide avec un jeu radial minimal. En cas de réalisation cylindrique de la surface latérale de cette tête, les efforts radiaux sont répartis sur une plus grande surface par comparaison à l'état de la technique présentant des têtes sphériques. Il en résulte une pression superficielle moindre et une diminution de l'usure.

De préférence, l'élément d'articulation est formé par une bille, respectivement une portion de bille, percée ou pourvue d'un trou borgne. Comme élément d'articulation, on peut cependant aussi utiliser un manchon ou une douille pivotant et coulissant axialement à l'intérieur du logement creux, noyée dans des corps déformables élastiquement, par exemple des blocs de caoutchouc ou de plastique.

Le montage de l'élément d'articulation peut être simplifié en divisant la partie de la ferrure formant le logement creux. Il est cependant également possible de caler un élément sphérique d'une façon pivotante mais non coulissante dans le logement creux, d'une façon connue en soi au moyen d'un jonc ou analogue.

En partant d'une position neutre ou moyenne, le pivot doit pouvoir subir des variations angulaires atteignant notamment 10° par rapport au logement creux. Ce qui importe dès lors pour le modèle à utilisation unique, abstraction faite du dimensionnement lié à la charge, est l'espace disponible en direction radiale sur la feuille de verre et sur l'ossature ainsi que l'épaisseur nécessaire du pivot et les angles de pivotement nécessaires dans l'élément de fixation.

Un tel élément, qui permet une déviation ou une courbure élastique de la plaque fixée avec lui par rapport à des charges de surface à présent aussi en direction normale au plan de la plaque, peut être utilisé de façon particulièrement avantageuse comme point d'appui au centre ou dans la surface de grandes plaques. En utilisant les éléments de fixation usuels à l'heure actuelle, qui ne permettent aucune ou seulement une très faible course de déviation en direction normale, les plaques sont extrêmement sollicitées en flexion à de tels points d'appui centraux ou de face, parce qu'il apparaît des flexions de même sens de part et d'autre du point d'appui respectif. Ce cas de charge est notablement réduit par un élément de fixation réalisé conformément à l'invention. Des forces de résistance ou de rappel intérieures nécessaires contre de tels déplacements, qui peuvent se situer dans le domaine inférieur ou égal à ± 5 mm, peuvent être garanties dans une exécution préférée, par des éléments à ressort, dont la précontrainte peut être réglée, ou respectivement ajustée. De plus, on peut prédéterminer au moyen de tels éléments à ressort une position neutre définie (position zéro ou de repos) de l'extrémité libre du pivot à l'intérieur du logement creux. Dans le cas d'un élément de manchon élastique ou d'éléments d'articulation élastiques équivalents, les résistances élastiques à la déformation peuvent en outre être utilisées pour le réglage de ladite position neutre.

Naturellement, les éléments de fixation proposés ici sont également aptes à être utilisés universellement, en plus de tels cas d'application spécifiques, pour tous les autres points de fixation pour lesquels on désire au moins un appui mobile en rotation. ILs conviennent ainsi pour être utilisés dans un système de construction modulaire basé sur des éléments unitaires.

Bien entendu, on pourrait en principe, avec de tels éléments de fixation, fixer aussi à des ossatures avec les degrés de liberté souhaités des vitres feuilletées à plusieurs couches ou des éléments de vitrage avec des pièces d'écartement (vitrages isolants) jusqu'à des vitrages de protection contre l'incendie ainsi que des plaques en d'autres matériaux comme la céramique, la pierre, le plastique, le métal, etc. On peut également imaginer de fabriquer l'élément de fixation lui-même en matériaux non métalliques à haute résistance ou en matériaux composites.

Du fait que les mobilités de l'élément de fixation sont à présent séparées en degrés de liberté en rotation et en translation axiale, l'usure d'un tel dispositif est réduite au minimum inévitable. Il en résulte aussi, par comparaison avec l'état de la technique pertinent, beaucoup d'autres possibilités pour optimiser la souplesse en direction axiale du pivot.

D'autres détails et avantages de l'objet de l'invention sont illustrés par le dessin de deux exemples de réalisation et par leur description détaillée qui suit.

Dans ces dessins, constituant des représentations schématiques en coupe,
- la figure 1 unique montre une forme de réalisation d'un élément de fixation (ou attache ponctuelle) pour des plaques avec un pivot pivotant et légèrement mobile axialement et un élément d'articulation ayant la forme d'une bille perforée; et
- la figure 2 illustre une seconde forme de réalisation, dans laquelle l'élément d'articulation se présente comme un manchon métal-élastomère.

Il faut préciser d'emblée que, dans la suite, les termes « extérieur » respectivement « côté extérieur » désignent chaque fois le côté de l'élément de fixation, respectivement des éléments de construction environnants, généralement libre situé à l'opposé de l'ossature, et que les termes « intérieur », respectivement « côté intérieur » désignent chaque fois leur côté tourné vers l'ossature. L'ossature peut par exemple être disposée à une façade ou à une paroi intérieure de bâtiment, à un pont ou analogue.

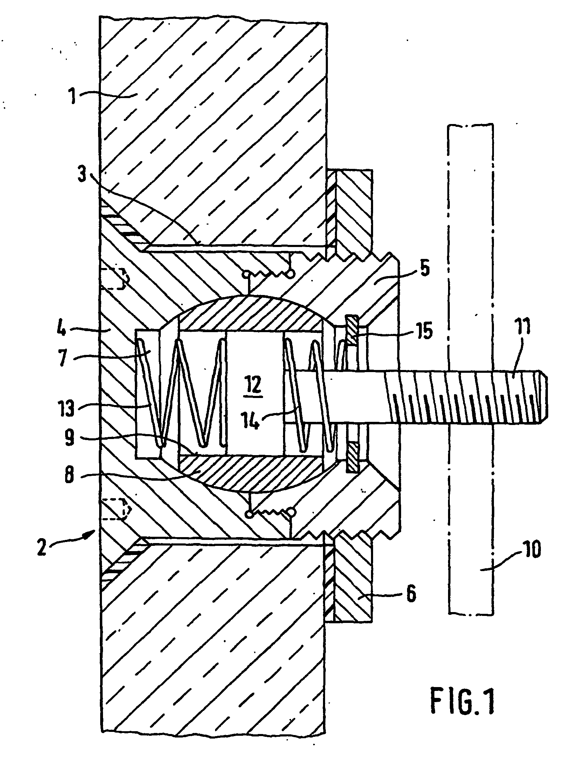

Suivant la figure 1, un élément de fixation 2 est fixé à une vitre monolithique 1 dans un alésage traversant 3 de la vitre 1. Il comprend une partie de ferrure externe 4, qui en position montée affleure à la face tournée vers l'extérieur de la vitre 1, et une partie de ferrure interne 5, qui est assemblée à la partie de ferrure externe 4 d'une manière séparable ou non. On a indiqué ici un vissage de ces deux parties dans un joint de séparation. La partie de ferrure externe 4 prend appui par une tête noyée conique et une bague d'appui correspondante en plastique sur la vitre 1 dans la région d'extrémité extérieure conique de l'alésage 3. Partant de l'autre côté de la vitre 1, on a vissé sur la partie de ferrure interne 5, respectivement sur son corps pourvu d'un filetage extérieur, un écrou en forme de rondelle 6, qui prend appui sur le côté intérieur de la vitre 1 - également avec interposition d'une rondelle de plastique. Les couches intermédiaires empêchent de façon connue un contact direct entre la matière de l'élément de fixation, qui est en général un métal, et le verre.

Le mode de fixation de l'élément de fixation 2 à la plaque, respectivement à la vitre 1, n'est cependant pas important ici. La disposition représentée ne sert que d'exemple sans intention de limitation. D'autres variantes de réalisation sont décrites abondamment dans l'état de la technique. On mentionnera en particulier qu'il n'est pas absolument indispensable de prévoir un alésage traversant dans la vitre, respectivement dans d'autres plaques à fixer.

Les deux parties de ferrure 4 et 5 forment ensemble un logement creux 7 séparable suivant le joint de séparation précité. Dans celui-ci est introduit un élément d'articulation 8 sous la forme d'une bille percée (perforée) avec un alésage traversant 9, d'une façon telle qu'il puisse pivoter librement avec un jeu radial aussi faible que possible. Dans le présent exemple de réalisation, le centre de pivotement se situe de façon connue en soi à l'intérieur de l'épaisseur de la vitre 1, que l'élément de fixation 2 sert à fixer. D'autres dispositions du centre de pivotement à l'extérieur de la vitre 1 ou même au ras de sa surface intérieure peuvent cependant aussi être prévues en cas de besoin; à cet effet, il faut simplement adapter la configuration d'assemblage des parties de ferrure et éventuellement leur fixation à la vitre.

Il existe naturellement aussi d'autres moyens pour incorporer un élément d'articulation dans un logement creux prévu à cet effet et le fixer axialement dans celui-ci ; ceux-ci ne doivent pas être exclus ici. Seule importe la liberté de pivotement dans le logement creux du pivot utilisé dans l'élément d'articulation.

Pour l'assemblage de l'élément de fixation 2 en plus de la vitre 1 avec une ossature 10 simplement indiquée ici en trait mixte avec une portion de support, il est prévu un pivot 11 qui s'étend à travers un trou dans la portion de support et jusque dans le logement creux 7, respectivement dans l'alésage 9 de l'élément d'articulation 8. A son extrémité libre située dans cet alésage, le pivot 11 porte un épaississement (tête) en forme de piston 12. Cette tête est logée dans l'alésage 9 de façon coulissante sans grippage avec un jeu radial aussi faible que possible (ajustement glissant). Lors du choix de l'ajustement, il convient naturellement de tenir compte des dilatations thermiques possibles, ainsi que lors de l'appui de l'élément d'articulation.

Pour la détermination d'une position neutre ou moyenne définie et pour la limitation de la mobilité axiale de la surépaisseur 12 à l'intérieur de l'alésage 9, il est prévu des ressorts de pression sur les deux côtés de la tête 12. Le ressort extérieur 13 prend appui en direction axiale d'une part sur la face frontale extérieure de la tête 12 et d'autre part dans la partie de ferrure externe 4 sur le fond intérieur du logement creux 7. Eventuellement, on prévoira des moyens appropriés pour le centrage du ressort extérieur 13 par rapport à l'axe central de l'élément de fixation, qui ne sont cependant pas représentés ici.

Le ressort intérieur 14 entoure avec un large jeu radial la tige du pivot 11. Il prend appui en direction axiale d'une part sur la face frontale intérieure de la tête 12 et d'autre part sur un épaulement annulaire 15 prévu dans la partie de ferrure interne. Ce dernier peut par exemple être réalisé, comme cela est représenté ici, de façon démontable sous la forme d'un jonc inséré dans une rainure de la partie de ferrure interne 5, si une telle solution est capable de reprendre en toute sécurité les efforts s'exerçant en direction axiale. Bien entendu, d'autres solutions portant sur des détails de construction sont également possibles ici, sans modifier la disposition de principe de la tête dans l'élément d'articulation et la fixation de sa position mobile axialement. Ainsi, au lieu des ressorts de pression hélicoïdaux représentés ici, on peut aussi utiliser d'autres éléments élastiques appropriés, par exemple des éléments en caoutchouc souple ou en matières plastiques, pour définir la position neutre de la surépaisseur dans l'alésage.

Les élasticités, respectivement les raideurs de ressort, disponibles peuvent par ailleurs être obtenues en utilisant des ressorts de dureté différente. On peut également prévoir de modifier selon les besoins la précontrainte des ressorts de pression après le montage par des moyens de réglage, par exemple des vis de réglage dans l'élément de fixation lui-même. Une telle solution serait cependant plus onéreuse que la représentation de principe montrée ici. Dans un cas extrême, la dureté des ressorts peut au besoin être réglée tellement haut que seuls de très faibles mouvements de déviation axiale soient possibles et que l'on réalise pratiquement ainsi un appui axial fixe. La mobilité axiale fondamentale de l'élément n'est cependant plus abandonnée dans ce cas.

Si l'alésage ménagé dans l'élément d'articulation doit, dans une variante non représentée, être un trou borgne, le ressort extérieur 13 peut alors prendre appui sur le fond de celui-ci. On pourrait aussi prévoir dans un alésage traversant un épaulement d'appui sur lequel le ressort extérieur 13 peut encore prendre appui à l'intérieur de l'élément d'articulation.

Le ressort intérieur peut également, en variante de la représentation de la figure 1, être en appui à l'intérieur de l'élément d'articulation, si suffisamment d'espace de montage est présent et si un épaulement d'appui ou similaire est prévu. Dans une telle conception, les ressorts 13 et/ou 14 ne devraient pas être déformés élastiquement par des mouvements de pur pivotement de l'élément de fixation.

L'élément de fixation 2 décrit ici peut être complètement prémonté sur la vitre 1. On introduit par exemple d'abord l'élément d'articulation 8 et le ressort extérieur 13 dans la partie de ferrure externe 4. Ensuite, on insère le pivot 11 avec sa tête en surépaisseur 12 dans l'alésage 9 de l'élément d'articulation 8. On pose ensuite le ressort intérieur 14 sur la tête 12. Enfin, la partie de ferrure interne 5 avec l'épaulement annulaire 15, donc ici le jonc 16, est mise en place et assemblée à la partie de ferrure externe, ici par vissage. Ainsi, d'une part l'élément d'articulation est bloqué dans le logement creux, et de préférence une association appropriée des matériaux, un revêtement glissant et/ou un graissage à vie assurent une longue mobilité de pivotement libre de l'élément d'articulation. D'autre part, les deux ressorts sont précontraints de la façon désirée, et le pivot 11, à présent logé de façon pivotante et axialement coulissante, sort vers l'extérieur. Enfin, on installe cet ensemble par le côté extérieur dans l'alésage 3 de la vitre 1 et on le bloque en même temps que les couches intermédiaires à l'aide de l'écrou 6.

On peut accorder l'un à l'autre le diamètre extérieur de la tête et les diamètres intérieurs de l'alésage de l'élément d'articulation et de la partie de ferrure interne d'une façon telle que le pivot avec sa surépaisseur d'extrémité puisse être introduit dans l'alésage de l'élément d'articulation, respectivement retiré de celui-ci, avant la mise en place, respectivement après l'enlèvement du jonc.

Après le prémontage de l'élément de fixation 2, le pivot 11 est bloqué dans sa direction axiale par rapport à l'ossature 10 de la façon habituelle, de préférence de façon démontable avec des vis appropriées. Le cas échéant, il faut également y prévoir des degrés de liberté en translation radialement par rapport à l'axe du pivot, respectivement parallèlement au plan de la portion de support. Le pivot 11 retransmet ainsi à l'ossature 10 toutes les charges telles que le poids ainsi que les efforts dus au vent et les dilatations d'origine thermique etc., qui sont transmises par la vitre 1 à l'élément de fixation 2. D'autres détails de cette ossature ne sont pas représentés ici. A cet égard et pour des détails plus précis concernant la liaison et les degrés de liberté en translation de l'élément de fixation à l'ossature, on se référera une nouvelle fois à l'important état de la technique dans ce domaine.

Les parties de ferrure 4 et 5 de l'élément de fixation 2 assemblées à la vitre 1 peuvent dans tous les cas pivoter librement par rapport au pivot 11 grâce à l'élément d'articulation 8, c'est-à-dire qu'elles sont supportées avec des degrés de liberté en rotation. Usuellement, on considère des angles de pivotement d'environ 5° dans toutes les directions. Ainsi, des courbures de la vitre 1 peuvent ici être reprises et compensées sans efforts de résistance importants. En outre, la mobilité axiale de la tête 12 dans l'alésage 9 ainsi que les deux ressorts 13 et 14 autorisent des variations de la distance entre la vitre 1 et l'ossature, qui sont finalement limitées dans la présente réalisation par la longueur de blocage respective des ressorts de compression comprimés à fond. Le pivot respectivement sa surépaisseur d'extrémité peut, dans la présente construction, plonger axialement dans les deux directions plus ou moins profondément dans l'élément de fixation 2 à partir d'une position neutre, contre l'action de forces de rappel élastiques. En plus, les ressorts 13 et 14 peuvent également exercer des couples de rappel contre les oscillations de l'élément d'articulation 8 dans le logement creux.

La charge principale de l'élément de fixation est le poids de la vitre 1. En position normale de montage, elle agit perpendiculairement à l'axe longitudinal du pivot. Entre la surface latérale cylindrique de la tête 12 et la paroi de l'alésage 9 dans l'élément sphérique, le jeu radial faible garantit un contact de surface tel que la charge principale soit reportée dans le pivot par une surface relativement grande.

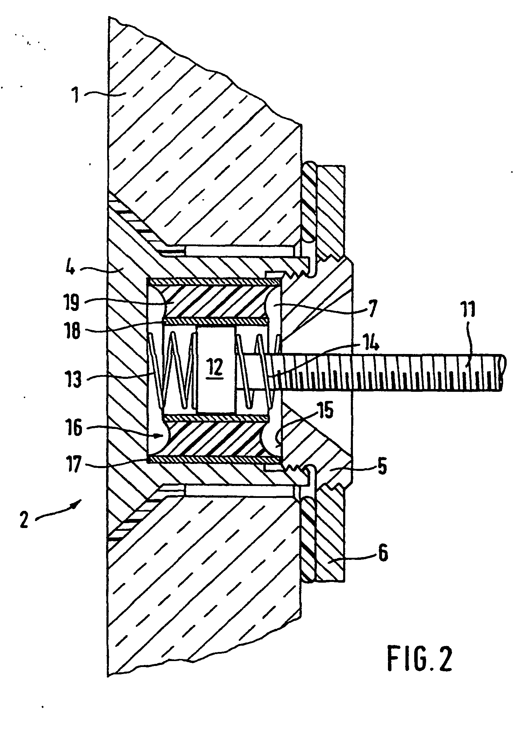

Dans la variante de l'élément de fixation représentée dans la Figure 2, on utilise comme élément d'articulation 8 à la place de l'élément à rotule un élément de manchon 16, qui est serré entre les deux parties de ferrure de l'élément de fixation. Il se compose d'une douille radialement extérieure 17, d'une douille radialement intérieure 18 disposée concentriquement à celle-ci ainsi que d'un anneau d'articulation 19 élastiquement déformable, qui est disposé dans la fente annulaire entre les deux douilles. La liaison entre l'anneau d'articulation et les douilles, qui peuvent être constituées de métal ou de matériaux non métalliques, présente une haute résistance, par exemple par collage ou vulcanisation.

Des éléments de cette nature sont en soi connus par exemple comme amortisseurs dans le domaine de la construction des châssis de véhicules automobiles. L'anneau d'articulation peut être constitué de caoutchouc ou d'élastomères appropriés, sa raideur élastique pouvant être réglée dans des limites très larges selon les besoins par le choix des matériaux et la configuration géométrique. En direction radiale, ces éléments sont en règle générale très raides, néanmoins la douille intérieure peut aussi bien pivoter par rapport à l'axe central que se déplacer en direction axiale par rapport à la douille extérieure par une déformation élastique de l'anneau d'articulation.

Le reste de la structure de l'élément de fixation correspond essentiellement à la réalisation illustrée dans la Figure 1, de sorte qu'il n'y a pas lieu d'expliquer encore une fois ici les pièces individuelles. Cependant, la construction est nettement plus simple et la fabrication est ainsi plus économique à cause de la disparition de l'élément à rotule. Ainsi, la douille extérieure 18 peut être simplement serrée axialement et radialement sans jeu dans le logement creux entre les deux parties de ferrure 4 et 5 à visser l'une dans l'autre. L'épaulement annulaire 15 servant d'appui au ressort intérieur 14 est ici intégré directement dans la partie de ferrure interne 5. Il bloque en outre l'élément de manchon en direction axiale par sa douille extérieure 18. Avantageusement, le diamètre intérieur de l'épaulement 15 de la partie de ferrure 5 est plus petit que le diamètre extérieur de la tête 12 du piston, assurant une sécurité mécanique afin que le piston ne puisse sortir en dehors de l'espacement 7. La douille intérieure 19 est légèrement plus courte en direction axiale que la douille extérieure 18. Sa surface latérale intérieure forme l'alésage de l'élément d'articulation, dans lequel est logée avec un jeu radial aussi faible que possible la surépaisseur d'extrémité 12 du pivot 11, qui peut cependant coulisser axialement. Ici également, il convient de veiller à nouveau par des moyens appropriés à la souplesse du mouvement coulissant.

Dans une variante, l'anneau d'articulation pourrait être fixé directement à la partie de ferrure extérieure 4, la douille extérieure 17 pouvant alors être supprimée.

## Revendications

1. Elément de fixation (2) pour des plaques, en particulier pour des feuilles de verre (1), qui comprend un pivot allongé (11) à fixer à une ossature (10) et présentant une extrémité libre et un logement creux (7) hébergeant celle-ci de façon mobile, dans lequel un élément d'articulation (8) qui supporte le pivot de façon pivotante dans le logement creux (7) permet des mouvements de basculement de l'axe longitudinal du pivot (11) dans le logement creux (7), **caractérisé en ce que** l'élément d'articulation (8) est constitué d'un élément sphérique monté de façon pivotante et doté d'un alésage (9) en tant que logement creux, dans lequel une tête (12) située à l'extrémité libre du pivot (11) est guidée de façon coulissante axialement avec un jeu radial minimal.

2. Elément de fixation (2) pour des plaques, en particulier pour des feuilles de verre (1), qui comprend un pivot allongé (11) à fixer à une ossature (10) et présentant une extrémité libre et un logement creux (7) hébergeant celle-ci de façon mobile, dans lequel un élément d'articulation (8) qui supporte le pivot de façon pivotante dans le logement creux (7) permet des mouvements de basculement de l'axe longitudinal du pivot (11) dans le logement creux (7), **caractérisé en ce que** l'élément d'articulation (8) est constitué par un élément de manchon (16) avec au moins un composant (19) élastiquement déformable et un manchon interne, dans lequel une tête (12) située à l'extrémité libre du pivot (11) peut être déplacée et guidée axialement avec un jeu radial minimal et peut être guidée en pivotement avec déformation élastique du composant (19) élastiquement déformable.

3. Elément de fixation suivant la revendication 1 ou la revendication 2, **caractérisé en ce que** la tête (12) possède une surface latérale cylindrique.

4. Elément de fixation suivant l'une quelconque des revendications précédentes, **caractérisé en ce que** le logement creux (7) pour l'élément d'articulation (8) est formé par deux parties de ferrure (4, 5) assemblées l'une à l'autre suivant un joint de séparation.

5. Elément de fixation suivant la revendication 1, **caractérisé en ce qu'**il est prévu à l'intérieur de l'alésage (9) de l'élément d'articulation (8) des éléments élastiques (13, 14; 19) pour le réglage d'une position neutre de l'extrémité libre du pivot (11) dans la direction axiale de celui-ci.

6. Elément de fixation suivant la revendication 5, **caractérisé en ce que** les éléments élastiques ont la forme de ressorts de compression (13, 14).

7. Elément de fixation suivant la revendication 5 ou 6, **caractérisé en ce que** les éléments élastiques (13, 14) sont disposés de part et d'autre d'une tête d'extrémité (12) du pivot (11) et prennent chacun appui d'un côté sur la tête (12).

8. Elément de fixation suivant la revendication 7 , **caractérisé en ce que** l'autre côté des éléments élastiques (13, 14) prend appui sur le fond du logement creux (7), respectivement sur un épaulement annulaire (15) entourant le pivot (11).

9. Elément de fixation suivant la revendication 7, **caractérisé en ce que** l'autre côté aussi des éléments élastiques (13, 14) prend appui à l'intérieur de l'alésage (9).

10. Plaque, en particulier feuille de verre, avec au moins un perçage et, monté dans celui-ci, un élément de fixation selon l'une quelconque des revendications précédentes.

11. Utilisation d'une plaque selon la revendication 10 pour le vitrage d'un bâtiment, en particulier le vitrage d'une façade.

## Claims

1. A fastener (2) for plates, particularly for sheets of glass (1), which comprises an elongate pivot (11) to be fixed to a framework (10) and which has a free end and a hollow housing (7) housing this free end in a moveable way, in which fastener an articulation element (8) which pivotably supports the pivot in the hollow housing (7) allows tilting movements of the longitudinal axis of the pivot (11) in the hollow housing (7), **characterized in that** the articulation element (8) consists of a spherical element pivotably mounted and provided with a bore (9) by way of hollow housing, in which bore the free end of the pivot (11) is supported with axial sliding with minimal radial play.

2. A fastener (2) for plates, particularly for sheets of glass (1), which comprises an elongate pivot (11) to be fixed to a framework (10) and which has a free end and a hollow housing (7) housing this free end in a moveable way, in which fastener an articulation element (8) which pivotably supports the pivot in the hollow housing (7) allows tilting movements of the longitudinal axis of the pivot (11) in the hollow housing (7), **characterized in that** the articulation element (8) consists of a sleeve element (16) with at least one elastically deformable component (19) and an internal sleeve, in which a head (12) at the free end of the pivot (11) can be moved axially with minimal radial clearance and can be guided in pivoting with elastic deformation of the elastically deformable component (19).

3. The fastener as claimed in claim 1 or in claim 2, **characterized in that** the head (12) has a cylindrical lateral surface.

4. The fastener as claimed in any one of the preceding claims, **characterized in that** the hollow housing (7) for the articulation element (8) is formed of two parts of a fitting (4, 5) which are assembled along a parting line.

5. The fastener as claimed in claim 1, **characterized in that** provided inside the bore (9) of the elastic element (8) are elastic elements (13, 14; 19) for adjusting the free end of the pivot (11) into a neutral position in the axial direction thereof.

6. The fastener as claimed in claim 5, **characterized in that** the elastic elements have the form of compression springs (13, 14).

7. The fastener as claimed in claim 5 or 6, **characterized in that** the elastic elements (13, 14) are arranged one on each side of an end head (12) of the pivot (11) and each bear against the head (12) at one side.

8. The fastener as claimed in claim 7, **characterized in that** the other side of the elastic elements (13, 14) bears, in the case of one of them, against the closed end of the hollow housing (7) and, in the case of the other, against an annular shoulder (15) surrounding the pivot (11).

9. The fastener as claimed in claim 7, **characterized in that** yet another side of the elastic elements (13, 14) bears against the inside of the bore (9).

10. A plate, particularly a sheet of glass, with at least one hole and, mounted therein, a fastener as claimed in any one of the preceding claims.

11. The use of a plate as claimed in claim 13 for glazing a building, particularly for glazing a facade.

## Patentansprüche

1. Befestigungselement (2) für Platten, insbesondere für Glasscheiben (1), welches einen an einer Unterkonstruktion (10) festlegbaren länglichen Lagerzapfen (11) mit einem freien Ende und einen dieses beweglich aufnehmenden, mit der Platte verbundenen Aufnahmehohlraum (7) umfasst, wobei ein den Lagerzapfen in dem Aufnahmehohlraum (7) schwenkbar lagerndes Gelenkelement (8) Kippbewegungen der Längsachse des Lagerzapfens (11) im Aufnahmehohlraum (7) ermöglicht, **dadurch gekennzeichnet, dass** das Gelenkelement (8) als schwenkbar gelagertes Kugelelement mit einer Bohrung (9) ausgeführt ist, in der ein am freien Ende des Lagerzapfens (11) angeordneter Kopf (12) mit geringstmöglichem radialem Spiel axial verschiebbar gelagert ist.

2. Befestigungselement (2) für Platten, insbesondere für Glasscheiben (1), welches einen an einer Unterkonstruktion (10) festlegbaren länglichen Lagerzapfen (11) mit einem freien Ende und einen dieses beweglich aufnehmenden, mit der Platte verbundenen Aufnahmehohlraum (7) umfasst, wobei ein den Lagerzapfen in dem Aufnahmehohlraum (7) schwenkbar lagerndes Gelenkelement (8) Kippbewegungen der Längsachse des Lagerzapfens (11) im Aufnahmehohlraum (7) ermöglicht, **dadurch gekennzeichnet, dass** das Gelenkelement (8) als Hülsenelement (16) mit mindestens einem elastisch verformbaren Bestandteil (Gelenkring 19) und einer inneren Buchse (18) ausgeführt ist, in der ein am freien Ende des Lagerzapfens (11) angeordneter Kopf (12) mit geringstmöglichem radialem Spiel axial verschiebbar und durch elastische Verformung des elastisch verformbaren Bestandteils (19) schwenkbar geführt ist.

3. Befestigungselement nach Anspruch 1 oder 2, **dadurch gekennzeichnet, dass** der Kopf (12) eine zylindrische Mantelfläche aufweist.

4. Befestigungselement nach einem der vorstehenden Ansprüche, **dadurch gekennzeichnet, dass** dessen Aufnahmehohlraum (7) für das Gelenkelement (8; 16) durch zwei in einer Teilfuge miteinander verbundene Beschlagteile (4, 5) gebildet ist.

5. Befestigungselement nach einem der vorstehenden Ansprüche, **dadurch gekennzeichnet, dass** innerhalb der Bohrung (9) des Gelenkelements (8, 16) Federelemente (13, 14; 19) zum Einstellen einer neutralen Stellung des freien Endes des Lagerzapfens (11) in dessen Achsrichtung vorgesehen sind.

6. Befestigungselement nach Anspruch 5, dessen Federelemente als Druckfedern (13, 14) ausgeführt sind.

7. Befestigungselement nach einem der Ansprüche 5 oder 6, **dadurch gekennzeichnet, dass** die Federelemente (13, 14) beidseits eines Kopfes (12) des Lagerzapfen (11) angeordnet sind und sich jeweils mit einer Seite auf dem Kopf (12) abstützen.

8. Befestigungselement nach Anspruch 7, **dadurch gekennzeichnet, dass** die andere Seite der Federelemente (13, 14) auf dem Boden des Aufnahmehohlraums (7) bzw. auf einer den Lagerzapfen (11) umgebenden Ringschulter (15) abgestützt ist.

9. Befestigungselement nach Anspruch 7, **dadurch gekennzeichnet, dass** die andere Seite der Federelemente (13, 14) innerhalb der Bohrung (9) abgestützt ist.

10. Platte, insbesondere Glasscheibe, mit mindestens einer Bohrung und mit einem darin befestigten Befestigungselement nach einem der vorstehenden Ansprüche.

11. Verwendung einer Platte nach Anspruch 10 in einer Gebäudeverglasung, insbesondere in einer Fassadenverglasung.
